# EUROPEAN PATENT APPLICATION

(11) **EP 4 810 300 A1**
(43) Date of publication of application: **23.09.2026**
(21) Application number: 26163665.8
(22) Date of filing: 10.03.2026
(51) Int. Cl.: B60L 3/12, B60L 58/16, H01M 10/44, H01M 10/48, H01M 10/633, B60L 58/26, H01M 10/625, H01M 10/613

(54) **BATTERY SYSTEM**

(30) Priority: 21.03.2025 JP 2025046216
(71) Applicant: Toyota Jidosha Kabushiki Kaisha, Toyota-shi, Aichi-ken 471-8571 (JP)
(72) Inventor: SUGINO, Yoshiki, Toyota-shi (JP); MORIYA, Yuki, Toyota-shi (JP); IMADE, Yuki, Toyota-shi (JP); KUMAGAI, Yuma, Obu-shi (JP)
(74) Representative: J A Kemp LLP

(57) **Abstract**

An ECU executes processing including, in a case where direct current charging is started, a step of acquiring a temperature difference stored last time, a step of acquiring an elapsed time, a step of calculating a correction coefficient, a step of calculating a temperature difference, and a step of executing a direct current charging process, and in a case where charging is ended, a step of storing, as the temperature difference stored last time, a temperature difference when charging is ended.

## Description

### BACKGROUND OF THE INVENTION

### 1. Field of the Invention

The present disclosure relates to a battery system.

### 2. Description of Related Art

Japanese Unexamined Patent Application Publication No. 2021-068637 (JP 2021-068637 A) discloses a technique in which an electronic control unit (ECU) acquires a current and a temperature of a vehicle-mounted battery from a monitoring unit and estimates a state of charge (SOC).

### SUMMARY OF THE INVENTION

When a temperature of a power storage device such as the battery as described above increases in a case where the power storage device is charged, the power storage device may be cooled by using a cooling device. In a case where cooling is performed during charging, a temperature difference may occur between a surface portion of the power storage device and an internal portion of the power storage device (hereinafter, may be referred to as "inside and outside of the power storage device"). In a case where a temperature difference occurs between the inside and the outside of the power storage device, an allowable current during charging is calculated in consideration of the temperature difference. However, in a case where the ECU is in a power-off state or the like, for example, in a case where charging is ended, the temperature difference is reset, and thus it may not be possible to perform charging in consideration of the temperature difference between the inside and the outside of the power storage device in the subsequent charging.

The present disclosure has been made to solve the above-described problem, and an object thereof is to provide a battery system capable of performing charging in consideration of a temperature difference between an inside and an outside of a power storage device.

A battery system according to an aspect of the present disclosure includes: a power storage device mounted in a vehicle; a cooling device configured to cool the power storage device; a detection device configured to detect a surface temperature of the power storage device; and a control device configured to control charging of the power storage device. The control device is configured to estimate, by using an elapsed time from an end time point of previous charging to a start time point of current charging and a temperature difference between the surface temperature and an internal temperature of the power storage device at the end time point of the previous charging, the temperature difference at the start time point of the current charging, control the charging of the power storage device by using the temperature difference that is estimated, and store the temperature difference after the charging of the power storage device is ended.

In this manner, even in a case where the cooling device operates during the previous charging and the temperature difference between the surface temperature and the internal temperature in the power storage device increases, it is possible to estimate the temperature difference at the start time point of the current charging by using the elapsed time from the end time point of the previous charging to the start time point of the current charging and the temperature difference at the end time point of the previous charging, and it is possible to control the charging of the power storage device by using the estimated temperature difference, thereby suppressing promotion of capacity deterioration. Further, it is possible to precisely estimate the temperature difference in the next charging by storing the temperature difference after the charging is ended, thereby suppressing the promotion of the capacity deterioration.

In an embodiment, the control device is configured to store the temperature difference when a system of the vehicle is stopped after the charging of the power storage device is ended.

In this manner, it is possible to precisely estimate the temperature difference at the start time point of the current charging. Therefore, it is possible to charge the power storage device while the promotion of the capacity deterioration is suppressed, by using the estimated temperature difference.

In another embodiment, the control device is configured to acquire a correction coefficient corresponding to the elapsed time and multiply the correction coefficient that is acquired by the temperature difference to estimate the temperature difference at the start time point of the current charging.

In this manner, it is possible to precisely estimate the temperature difference at the start time point of the current charging by multiplying the correction coefficient acquired in accordance with the elapsed time by the temperature difference.

In still another embodiment, the control device is configured to set the correction coefficient to different values in a case where the vehicle travels during the elapsed time and in a case where the vehicle is left parked during the elapsed time.

In this manner, since the correction coefficient is set to be different depending on whether the vehicle travels during the elapsed time or whether the vehicle is left parked during the elapsed time, it is possible to precisely estimate the temperature difference at the start time point of the current charging.

In still another embodiment, the power storage device includes a lithium-ion secondary battery.
In this manner, it is possible to control a current flowing through the power storage device such that lithium is not precipitated, by precisely estimating the temperature difference at the start time point of the current charging. Therefore, it is possible to suppress the promotion of the capacity deterioration of the power storage device.

In still another embodiment, the cooling device is provided to be in contact with a lower surface of the power storage device. The internal temperature includes a temperature of a portion on the lower surface side in the power storage device.

In this manner, it is possible to precisely estimate the temperature difference between the temperature on the lower surface side in the power storage device that is likely to be affected by an operation of the cooling device and the surface temperature. Therefore, it is possible to suppress the promotion of the capacity deterioration.

According to the present disclosure, it is possible to provide a battery system capable of performing charging in consideration of a temperature difference between the inside and the outside of a power storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an example of a configuration of a vehicle equipped with a battery system according to the present embodiment;
FIG. 2 is a diagram showing an example of a change in a temperature difference ΔTB of a battery after cooling is started;
FIG. 3 is a flowchart showing an example of processing that is executed by an ECU; and
FIG. 4 is a timing chart illustrating an example of an operation of the ECU.

### DETAILED DESCRIPTION OF EMBODIMENTS

In the following, an embodiment of the present disclosure will be described in detail with reference to the drawings. It should be noted that, in the drawings, the same or corresponding parts are designated by the same reference signs and the description thereof will not be repeated.

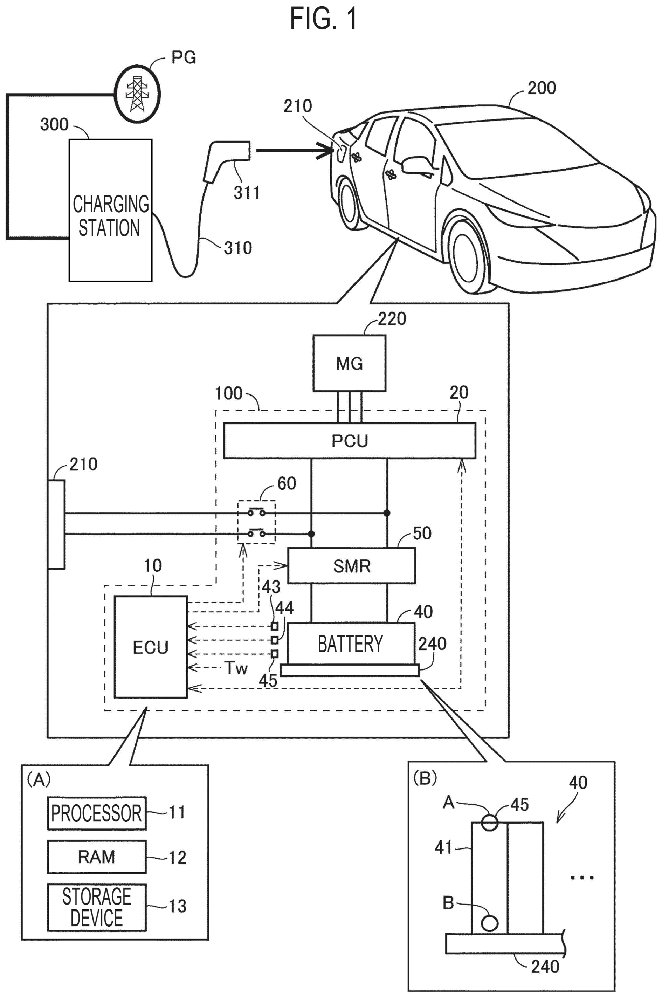

FIG. 1 is a diagram showing an example of a configuration of a vehicle 200 equipped with a battery system 100 according to the present embodiment.

The vehicle 200 can perform power exchange (charging and discharging) with a charging station 300 by being electrically connected to the charging station 300 through a cable 310. Direct current power is exchanged between a connector 311 provided at an end of the cable 310 and the vehicle 200. The charging station 300 exchanges power with a power system PG. In response to a request from the vehicle 200, the charging station 300, for example, converts alternating current power from the power system PG into direct current power, and supplies the direct current power to the vehicle 200. The vehicle 200 performs rapid charging (direct current charging) of a battery 40 by using the supplied direct current power.

The vehicle 200 is equipped with a battery system 100, an inlet 210, and a motor generator (MG) 220.

The vehicle 200 is configured to travel by using power stored in the battery 40 of the battery system 100. The vehicle 200 is, for example, a battery electric vehicle (BEV) that does not include an engine (internal combustion engine). However, the vehicle 200 is not limited thereto, and may be a plug-in hybrid electric vehicle (PHEV) including an internal combustion engine or may be another electrified vehicle (xEV).

The inlet 210 is provided on an exterior portion of the vehicle 200 and has a shape that can be fitted to the connector 311. The exterior portion includes an openable and closable cover, and the openable and closable cover is closed while the inlet 210 is not used. The inlet 210 is thus covered by the openable and closable cover, and exposure of the inlet 210 to the outside is suppressed.

The MG 220 is, for example, a three-phase alternating current rotating electrical machine. The MG 220 functions as a traction motor for the vehicle 200. The MG 220 is driven by alternating current power from the battery system 100, and rotates drive wheels of the vehicle 200. In addition, the MG 220 performs regenerative power generation and outputs the generated alternating current power to the battery system 100. The number of traction motors provided in the vehicle 200 is not particularly limited to one and may be two or more.

The battery system 100 includes an electronic control unit (ECU) 10, a power control unit (PCU) 20, the battery 40, a system main relay (SMR) 50, and a relay 60.

As shown in part (A) of FIG. 1, the ECU 10 is a control device including a processor 11, a random-access memory (RAM) 12, and a storage device 13. The storage device 13 is configured to save the stored information. The storage device 13 stores information used in a program (for example, a map, a mathematical formula, and various parameters), in addition to the program. In the present embodiment, the processor 11 executes the program stored in the storage device 13 to execute various types of processing by the ECU 10. However, these types of processing may be executed by only hardware (electronic circuit) without using software. The ECU 10 controls, for example, operations of the PCU 20, the SMR 50, and the relay 60.

A voltage sensor 43, a current sensor 44, and a battery temperature sensor 45 are connected to the ECU 10. The voltage sensor 43 detects a voltage VB of the battery 40 and outputs a signal indicating a detection result to the ECU 10. The current sensor 44 detects a current IB flowing through the battery 40 and outputs a signal indicating a detection result to the ECU 10. Further, the battery temperature sensor 45 detects a temperature TB of the battery 40 and outputs a signal indicating a detection result to the ECU 10. For example, as shown in part (B) of FIG. 1, the battery temperature sensor 45 detects a temperature of an upper surface of the battery 40 as the temperature TB.

The battery 40 includes a plurality of cells. A predetermined number of cells are arranged, for example, along a thickness direction of the cells. The predetermined number is not limited to any particular value. The cells are secondary batteries and are typically lithium-ion secondary batteries. A lithium-ion secondary battery is a battery in which lithium is a charge carrier, and may include not only a lithium-ion secondary battery in which an electrolyte is liquid but also an all-solid-state battery using a solid electrolyte. The battery 40 may be any power storage device, and for example, a large-capacity capacitor may be used instead of the battery 40.

The SMR 50 switches connection and disconnection of a power line from the battery 40 to the PCU 20 in response to a control signal received from the ECU 10. The SMR 50 is brought into a closed state (connected state) while the vehicle 200 travels. In addition, the SMR 50 is in the closed state in a case where power is exchanged between the battery 40 and the inlet 210 (and the charging station 300).

The relay 60 is located between the inlet 210 and a branch point on the power line that connects the PCU 20 and the SMR 50. The relay 60 switches the connection and disconnection of the power line (charge and discharge line) from the inlet 210 to the branch point in response to a control signal received from the ECU 10.

In the present embodiment, the charge and discharge line passing through the inlet 210 and the relay 60 is connected to the power line that connects the SMR 50 and the PCU 20.

In the vehicle 200 in a plug-in state, external charging (that is, charging of the battery 40 using power from the charging station 300) and external discharging (that is, discharging power of the battery 40 to the charging station 300) are enabled. The vehicle 200 may be configured to perform only external charging. The relay 60 is controlled to be in the closed state (connected state) when external charging or external discharging is performed, and the relay 60 is controlled to be in an open state (disconnected state) when neither external charging nor external discharging is performed.

The PCU 20 includes a circuit (for example, an inverter and a converter) that drives the MG 220 by using the power supplied from the battery 40. The inverter and the converter are configured by combining a plurality of switching elements, for example, and perform a switching operation of converting power in response to a control signal received from the ECU 10, a switching operation of performing boosting, or the like.

The vehicle 200 is further equipped with a cooling device 240 that is provided to be in contact with a lower surface of the battery 40 and cools the battery 40. The cooling device 240 may be, for example, configured by a medium passage that performs heat exchange between external air and the battery 40 by circulating a refrigerant using a pump or the like (none of which are shown), or may be configured to perform heat exchange between the battery 40 and a heat exchanger (not shown) that is temperature-adjusted by a refrigeration cycle.

In the vehicle 200 having the above-described configuration, in a case where the battery 40 is charged using the charging station 300, the battery 40 generates heat because of Joule heat or the like generated in an internal resistance. Therefore, the cooling device 240 is operated to cool the battery 40. In a case where cooling is performed during charging, a difference between a surface temperature and an internal temperature of the battery 40 (hereinafter, referred to as a temperature difference) may be increased. Here, the internal temperature includes a temperature of a portion on the lower surface side (side close to the cooling device 240) in the battery 40. The surface temperature indicates a temperature of the upper surface of the battery 40 (cell) on which the battery temperature sensor 45 is provided.

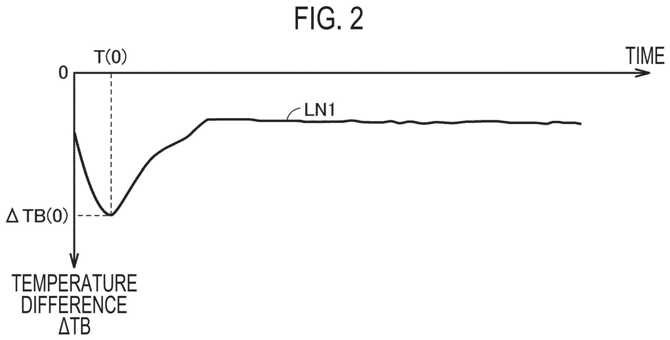

FIG. 2 is a diagram showing an example of a change in a temperature difference ΔTB of the battery 40 after cooling is started. A vertical axis of FIG. 2 indicates the temperature difference ΔTB. A horizontal axis of FIG. 2 indicates time. LN1 of FIG. 2 indicates the temporal change in the temperature difference ΔTB. The temperature difference ΔTB is indicated by a value obtained by subtracting the surface temperature (sensor detection value) of the battery 40 from the internal temperature of the battery 40.

In a case where cooling is started during charging, heat of a portion (see position B of part (B) of FIG. 1) on the lower surface side of the battery 40 is taken away by the cooling device 240. Therefore, the internal temperature of the battery 40 on the lower surface side decreases. On the other hand, a temperature (surface temperature) of an upper surface portion (position A of part (B) of FIG. 1) of the battery 40 is maintained because the influence of the operation of the cooling device 240 does not reach the upper surface portion in an initial stage of the cooling. As a result, as shown in LN1 of FIG. 2, the temperature difference ΔTB is increased (a magnitude in a negative direction is increased) with the passage of time, and reaches a peak (temperature difference ΔTB(0)) at time T(0). In a case where the operation of the cooling device 240 continues to take heat from the battery 40, the surface temperature of the battery 40 is also decreased. The temperature difference ΔTB is thus reduced (the magnitude in the negative direction is reduced) from time T(0) onward, and then the temperature difference ΔTB converges by balancing an amount of heat generated and an amount of heat dissipated in the battery 40 in a constant state. In this manner, in a case where the cooling device 240 operates during charging, the temperature difference ΔTB occurs. Therefore, the ECU 10 calculates an allowable charging current during charging in consideration of the temperature difference ΔTB. However, in a case where a system of the vehicle 200 is stopped when charging is ended and the ECU 10 is in a power-off state, the temperature difference ΔTB temporarily stored in the memory may be reset to an initial value (for example, zero), and it may not be possible to perform charging in consideration of the temperature difference ΔTB in the next charging. Therefore, capacity deterioration may be promoted and a battery life may be shortened.

Therefore, in the present embodiment, the ECU 10 performs the following operation. That is, the ECU 10 estimates the temperature difference ΔTB at a start time point of current charging by using an elapsed time from an end time point of previous charging to the start time point of the current charging and the temperature difference ΔTB at the end time point of the previous charging. The ECU 10 controls charging of the battery 40 by using the estimated temperature difference. The ECU 10 stores the temperature difference ΔTB after charging of the battery 40 is ended.

In this manner, even in a case where the cooling device 240 operates during the previous charging and the temperature difference ΔTB in the battery 40 increases, it is possible to estimate the temperature difference ΔTB at the start time point of the current charging by using the elapsed time from the end time point of the previous charging to the start time point of the current charging and the temperature difference ΔTB at the end time point of the previous charging, and it is possible to control charging of the battery 40 by using the estimated temperature difference, thereby suppressing promotion of capacity deterioration. Further, it is possible to precisely estimate the temperature difference ΔTB in the next charging by storing the temperature difference ΔTB after charging is ended, thereby suppressing the promotion of the capacity deterioration.

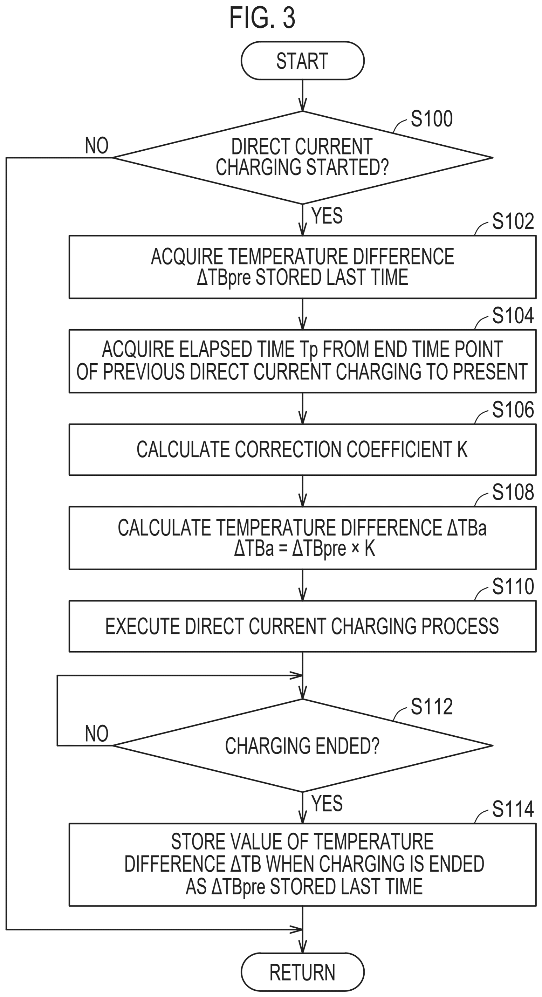

Hereinafter, an example of processing that is executed by the ECU 10 will be described referring to FIG. 3. FIG. 3 is a flowchart showing an example of the processing that is executed by the ECU 10.

In step (hereinafter, step is referred to as S) 100, the ECU 10 determines whether direct current charging is started. The ECU 10 determines that direct current charging is started, for example, in a case where the connector 311 is attached to the inlet 210 and the SOC of the battery 40 is lower than a threshold value. The ECU 10 may determine that direct current charging is started in a case where charging power is requested to the charging station 300. In a case where determination is made that direct current charging is started (YES in S100), the processing proceeds to S102.

In S102, the ECU 10 acquires the temperature difference ΔTBpre stored last time. The ECU 10 acquires, for example, the temperature difference ΔTBpre stored in the storage device 13 at the end time point of the previous direct current charging. Then, the processing proceeds to S104.

In S104, the ECU 10 acquires an elapsed time Tp from the end time point of the previous direct current charging to the present. The ECU 10 starts time measurement, for example, by activating a timer at the end time point of the previous direct current charging. The ECU 10 acquires a time measurement value obtained by the timer as the elapsed time Tp. Then, the processing proceeds to S106.

In S106, the ECU 10 calculates a correction coefficient K. A map indicating a relationship between the correction coefficient K and the elapsed time Tp is stored in advance in the storage device 13 of the ECU 10. Such a map is made suitable, for example, by an experiment or the like. The ECU 10 calculates the correction coefficient K by using the elapsed time Tp acquired in S104 and the map. Then, the processing proceeds to S108.

In S108, the ECU 10 calculates a temperature difference ΔTBa at the start time point of the current charging. The ECU 10 calculates the temperature difference ΔTBa by using an expression ΔTBa = ΔTBpre × K. Then, the processing proceeds to S110.

In S110, the ECU 10 executes a direct current charging process. The ECU 10 requests the charging station 300 to supply charging power. The charging station 300 starts supplying the charging power in response to the request from the ECU 10. The ECU 10 acquires the temperature difference ΔTB at time intervals determined in advance even after the direct current charging process is started, and sets a charging current during direct current charging by using the acquired temperature difference ΔTB. The ECU 10 requests the charging station 300 to supply charging power such that the set charging current flows. For example, in a case where the battery 40 is configured by a lithium-ion secondary battery, the ECU 10 estimates a range of charging current (allowable charging current) in which lithium is not precipitated in the battery 40 by using the acquired temperature difference ΔTB, and sets the charging current within the estimated range. As a method of acquiring the temperature difference ΔTB, for example, the temperature difference ΔTB may be acquired from the surface temperature based on the detection result of the battery temperature sensor 45 and the internal temperature estimated based on a temperature of the refrigerant in the cooling device 240 that is detected by a sensor (not shown), or the current temperature difference ΔTB may be acquired by calculating the correction coefficient K from the elapsed time from the time point when the most recent temperature difference ΔTB is acquired using maps that are different in a case where the cooling device 240 is operating and in a case where the cooling device 240 is not operating, and multiplying the most recently acquired temperature difference ΔTB by the correction coefficient K. Then, the processing proceeds to S110.

In S112, the ECU 10 determines whether charging is ended. After the direct current charging process is started, the ECU 10 monitors the SOC of the battery 40, and requests the charging station 300 to stop the supply of the charging power in a case where the SOC exceeds the threshold value. The charging station 300 stops the supply of the charging power in response to the request from the ECU 10. The ECU 10 determines that charging is ended in a case where the supply of the charging power from the charging station 300 is stopped. In a case where determination is made that charging is ended (YES in S112), the processing proceeds to S114. In a case where determination is made that charging is not ended (NO in S112), the processing returns to S112.

In S114, the ECU 10 stores, as ΔTBpre, the temperature difference ΔTB when charging is ended. Then, the processing is ended. In a case where determination is made that direct current charging is not started (NO in S100), the processing is ended.

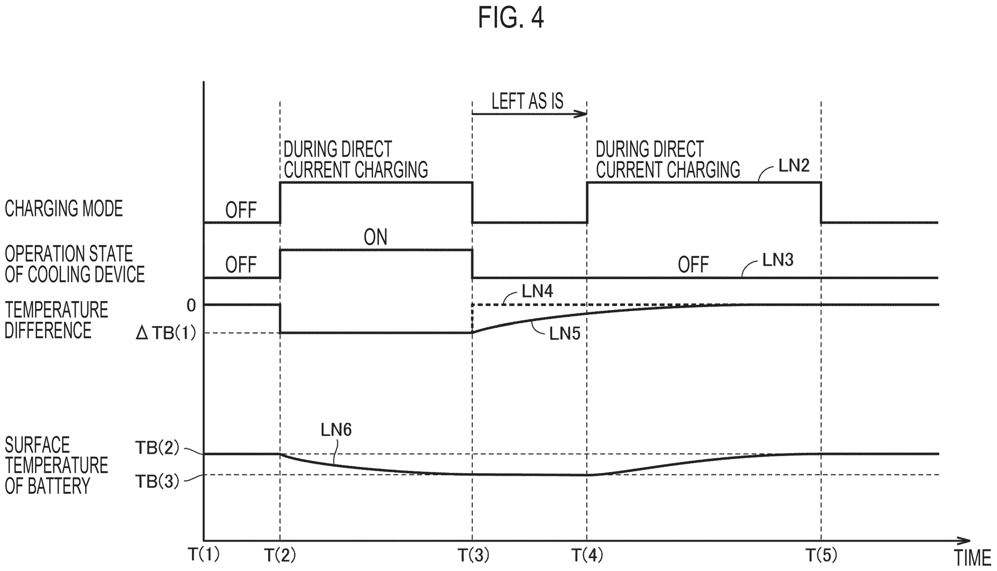

The operation of the ECU 10 based on the structure and the flowchart as described above will be described with reference to FIG. 4. FIG. 4 is a timing chart illustrating an example of the operation of the ECU 10. A vertical axis of FIG. 4 indicates a charging mode, an operation state of the cooling device 240, the temperature difference ΔTB, and the surface temperature of the battery 40. A horizontal axis of FIG. 4 indicates time. LN2 of FIG. 4 indicates a temporal change in the charging mode. LN3 of FIG. 4 indicates a temporal change in the operation state of the cooling device 240. LN4 (broken line) of FIG. 4 indicates a temporal change in the temperature difference ΔTB in a case where the temperature difference ΔTB is reset to the initial value at the end time point of charging. LN5 of FIG. 4 indicates a temporal change in the temperature difference ΔTB. LN6 of FIG. 4 indicates a temporal change in the surface temperature of the battery 40.

For example, in a case where charging is not being performed from time T(1) to time T(2) as shown in LN2 of FIG. 4 and the cooling device 240 is in a stopped state as shown in LN3 of FIG. 4, the temperature of the battery 40 is a uniform temperature. Therefore, as shown in LN6 of FIG. 4, in a case where the surface temperature of the battery 40 is maintained at a temperature TB(2), the temperature difference ΔTB is zero as shown in LN5 of FIG. 4.

On the other hand, as shown in LN2 of FIG. 4, in a case where the connector 311 is attached to the inlet 210 at time T(2), the charging mode is switched to a mode during direct current charging, and direct current charging is started (YES in S100). The temperature difference ΔTBpre stored last time is acquired (S102), the elapsed time Tp is acquired (S104), and the correction coefficient K is calculated (S106). Then, the temperature difference ΔTBa is calculated by using the expression described above. In a case where the temperature difference ΔTBpre is zero, the temperature difference ΔTBa is also calculated as zero. Then, direct current charging is started. In this case, as shown in LN3 of FIG. 4, the cooling device 240 operates in a case where the surface temperature of the battery 40 is higher than the threshold value. As a result, heat is taken away from the lower surface of the battery 40, so that a temperature difference ΔTB(1) is obtained. When the cooling device 240 operates, as shown in LN6 of FIG. 4, the surface temperature of the battery 40 also decreases with the passage of time, and decreases to a temperature TB(3).

In a case where determination is made that charging is ended by, for example, the connector 311 being removed at time T(3) (YES in S112), ΔTB(1) that is a value of ΔTB at the end time point of charging is stored in the storage device 13 of the ECU 10 as ΔTBpre. In this case, the cooling device 240 is in an operation stop state with the stop of direct current charging.

The battery 40 is left as is at time T(3) and afterward. In this case, as shown in LN6 of FIG. 4, the surface temperature of the battery 40 is maintained at TB(3), while the internal temperature of the battery 40 is increased since the cooling device 240 is in the operation stop state, and the temperature difference ΔTB thus varies so as to approach zero.

In a case where the connector 311 is attached again, or the like, at time T(4), the ECU 10 requests the charging station 300 to supply the charging power again, so that the charging station 300 restarts the supply of the charging power in response to the request. Therefore, as shown in LN2 of FIG. 4, the charging mode is switched again to the mode during direct current charging, and determination is made that direct current charging is started (YES in S100).

In this case, as shown in LN3 of FIG. 4, the operation stop state of the cooling device 240 is maintained in a case where the surface temperature of the battery 40 is equal to or lower than the threshold value. Therefore, the temperature difference ΔTBpre stored last time (= ΔTB(1)) is acquired (S102), the elapsed time Tp from the end time point of the previous direct current charging (= time T(3)) to the present is acquired (S104), and the correction coefficient K is calculated from the elapsed time Tp and the map (S106).

The temperature difference ΔTBpre stored last time is multiplied by the calculated correction coefficient K to estimate the temperature difference ΔTBa at time T(4) (S108). The direct current charging process is executed by using the temperature difference ΔTBa (S110). In this case, for example, in a case where the battery 40 is configured by a lithium-ion secondary battery, the ECU 10 sets the allowable charging current in which lithium is not precipitated by using a temperature obtained by adding the temperature difference ΔTBa to the battery temperature TB, sets the charging power not to exceed the set allowable charging current, and requests the charging station 300 to supply the set charging power. Therefore, the charging current is set in consideration of the temperature difference ΔTBa as compared with LN4 of FIG. 4, so that the promotion of the capacity deterioration of the battery 40 is suppressed. The ECU 10 may set the allowable charging current by using, for example, a map or the like indicating a relationship between the temperature obtained by adding the temperature difference ΔTBa to the battery temperature TB and the allowable charging current.

At time T(4) and afterward, the ECU 10 acquires the temperature difference ΔTB at time intervals determined in advance during direct current charging, and sets the allowable charging current by using the acquired temperature difference ΔTB. As shown in LN6 of FIG. 4, the surface temperature of the battery 40 increases with the passage of time at and after time T(4).

At time T(5), in a case where the SOC of the battery 40 reaches a fully charged state equal to or higher than the threshold value, determination is made that charging is ended (YES in S112), the charging mode is set to an off state as shown in LN2 of FIG. 4, and the temperature difference ΔTB (= 0) at the time point when charging is ended is stored in the storage device 13 as ΔTBpre (S114).

In this manner, with the battery system 100 according to the present embodiment, even in a case where the cooling device 240 operates during the previous charging and the temperature difference ΔTB in the battery 40 increases, it is possible to estimate the temperature difference ΔTBa at the start time point of the current charging by using the elapsed time Tp from the end time point of the previous charging to the start time point of the current charging and the temperature difference ΔTBpre at the end time point of the previous charging, and it is possible to control charging of the battery 40 by using the estimated temperature difference ΔTBa, thereby suppressing promotion of capacity deterioration. Further, it is possible to precisely estimate the temperature difference ΔTBa in the next charging by storing, as ΔTBpre, the temperature difference ΔTB after charging is ended, thereby suppressing the promotion of the capacity deterioration. Therefore, it is possible to provide a battery system capable of performing charging in consideration of a temperature difference between the inside and the outside of a power storage device.

In the following, a modification will be described.
In the above-described embodiment, a case in which the correction coefficient K is calculated from the elapsed time Tp regardless of a state of the vehicle in a period between the end time point of the previous charging and the start time point of the current charging has been described, but for example, the correction coefficient K may be set to different values in a case where the vehicle 200 is left parked in the period between the end time point of the previous charging and the start time point of the current charging and in a case where the vehicle 200 travels in the period between the end time point of the previous charging and the start time point of the current charging. In this manner, it is possible to precisely estimate the temperature difference ΔTB at the start time point of the current charging.

Further, in the above-described embodiment, a case of estimating the temperature difference ΔTB at the start time point of direct current charging has been described as an example, but in a case where the vehicle 200 is configured to be capable of alternating current charging, the temperature difference ΔTB at the start time point of alternating current charging may be similarly estimated.

Further, in the above-described embodiment, the temperature difference ΔTB at the time point when charging is ended is stored as ΔTBpre, but for example, the temperature difference ΔTB when the system of the vehicle 200 is stopped after charging is ended may be stored as ΔTBpre.

It should be noted that the modification described above may be carried out by combining all or a part thereof as appropriate.
The embodiment disclosed herein should be considered to be exemplary and not restrictive in all respects. The scope of the present invention is shown by the claims rather than by the above description and is intended to include all modifications within the meaning and scope equivalent to the claims.

## Claims

1. A battery system comprising:
a power storage device mounted in a vehicle;
a cooling device configured to cool the power storage device;
a detection device configured to detect a surface temperature of the power storage device; and
a control device configured to control charging of the power storage device,
wherein the control device is configured to
estimate, by using an elapsed time from an end time point of previous charging to a start time point of current charging and a temperature difference between the surface temperature and an internal temperature of the power storage device at the end time point of the previous charging, the temperature difference at the start time point of the current charging,
control the charging of the power storage device by using the temperature difference that is estimated, and
store the temperature difference after the charging of the power storage device is ended.

2. The battery system according to claim 1, wherein the control device is configured to store the temperature difference when a system of the vehicle is stopped after the charging of the power storage device is ended.

3. The battery system according to claim 1, wherein the control device is configured to acquire a correction coefficient corresponding to the elapsed time and multiply the correction coefficient that is acquired by the temperature difference to estimate the temperature difference at the start time point of the current charging.

4. The battery system according to claim 3, wherein the control device is configured to set the correction coefficient to different values in a case where the vehicle travels during the elapsed time and in a case where the vehicle is left parked during the elapsed time.

5. The battery system according to claim 1, wherein the power storage device includes a lithium-ion secondary battery.

6. The battery system according to claim 1, wherein:
the cooling device is provided to be in contact with a lower surface of the power storage device; and
the internal temperature includes a temperature of a portion on the lower surface side in the power storage device.
